# EUROPEAN PATENT SPECIFICATION

(11) **EP 2 651 227 B1**
(45) Date of publication and mention of the grant of the patent: **17.05.2017**
(21) Application number: 11807883.1
(22) Date of filing: 14.12.2011
(51) Int. Cl.: A23L 19/00, B65D 81/32, B65D 77/04, A21D 13/00

(54) **KIT FOR PREPARING A SNACK**
SET ZUR HERSTELLUNG EINER ZWISCHENMAHLZEIT
KIT DE PRÉPARATION D'UNE COLLATION

(30) Priority: 14.12.2010 IT FI20100242; 02.08.2011 IT FI20110160
(43) Date of publication of application: 23.10.2013
(73) Proprietor: Azienda Olearia Del Chianti S.r.L., 50020 Greve In Chianti (IT)
(72) Inventor: GONNELLI, Matteo, I-50023 Impruneta (IT)
(74) Representative: Gervasi, Gemma
(86) International application number: PCT/EP2011/072730
(87) International publication number: WO 2012/080316

(56) References cited:
- EP-A1- 1 116 668
- EP-A1- 1 568 279
- EP-A2- 1 053 682
- US-A- 5 277 920
- US-A1- 2002 197 360
- US-A1- 2004 013 781
- US-A1- 2010 272 863

## Description

### FIELD OF THE INVENTION

The present invention relates to the field of food products, and in particular to food products packaged in kits suited to the improvised preparation of snacks.

### PRIOR ART

Today's society is characterised by increasingly limited time for eating; in particular, snacks and afternoon teas that have a healthy nutritional content are difficult to find, especially when people are away from home due to work, study, travel commitments, or sporting or leisure activities.

There are commercially available sweet snacks of various types, the nutritional content of which is rich in sugars and fats, whereas the need is increasingly being felt for alternatives with low sugar and moderate fat content, preferably fats of vegetable origin.

There is therefore a clear need to provide an alternative solution for snacks or afternoon teas that have the healthiest nutritional content possible and still have the advantage of being easy to transport and prepare.

Patent document US 2010/0272863 discloses a meal kit comprising a package which may be a pouch with a wet sauce and a soft, shaped tortilla, which may have a concave shape. The soft, shaped tortilla is intended to hold the wet sauce when the meal is prepared.

### SUMMARY OF THE INVENTION

The present invention resolves the above-mentioned problems by means of a kit as defined in the present claims.

The present invention has the following advantages:
- It permits the easy carrying of the ingredients necessary for preparing the bread and oil in any place;
- It constitutes a practical and healthy snack;
- It can be used not only as a snack or as an afternoon tea, but also as bread and seasonings for side dishes or main courses;
- It is easy to carry and hygienic.

### DETAILED DESCRIPTION OF THE INVENTION

Preferably, the oil used is olive oil, but other oils of vegetable origin may be used (e.g. seed oil or similar). Said oil can also be flavoured, for example with rosemary, or with chilli pepper and many other well-known varieties of flavours.

Said tomato sauce is preferably a homogeneous sauce (for example a puree), already seasoned with appropriate seasonings such as oil, salt, pepper and possibly other flavourings in appropriate quantities. The consistency of the sauce is preferably capable of being poured from the container onto the piece of bakery product (for example, a piece of toast), but if the texture is firmer and the sauce therefore cannot be poured directly from the container, then the kit can also be provided with a spoon or stirrer suited to spreading the sauce onto the piece of the bakery product.

Said seasoning, whether it be oil or tomato sauce, is contained in a container that is easy to open and is preferably lockable. Said container is suited to containing a quantity of oil between 5 and 30 ml, more preferably between 10 and 20 ml.

It may also be contained in single-portion bags, but such bags, however, have the disadvantage of not being reclosable and also, since they are not rigid, it is difficult to keep them in an upright position to prevent the leakage of the liquid once opened. For this reason, said oil is preferably contained in a rigid reclosable container designed in a shape so as to be easily placed on a horizontal plane and capable of remaining in an upright position; and, to this end, said rigid container is preferably a reclosable bottle or a can with a screw cap. In this way, if, after preparation, a little of the oil is left over, it may still be stored and carried easily to be reused at a later time.

Even more preferably, the bottle or can is made of a plastic material (for example, PET) in order to be lightweight and unbreakable.

The pieces of the bakery product, for reasons of hygiene and preservation, are preferably packaged themselves (for example, individually or in groups of two or more pieces) in sachets suited to containing food.

Each piece of bakery product is a toasted half-roll which has a half-ovoid shape with an upper surface which is essentially flat but slightly concave and wrinkled, and which is 7-11 cm long, 3-6 cm wide, and 1.5 to 3 cm thick. Even more preferably, said bakery product is from 2 to 15 cm wide and/or long, and from 0.5 to 3 cm thick. Therefore, the kit according to the invention preferably contains one or more pieces of toasted bread as described above. In a particularly preferred embodiment, said pieces of toast are pieces of toasted bread of the "Granetti" type that therefore have a half-ovoid and hence concave shape, with an upper surface which is essentially flat but slightly concave and wrinkled, and which is 7-11 cm long, 3-6 cm wide, and 1.5-3 cm thick; and, even more preferably, 8-10 cm long, 4-5 cm wide, and 1.5-2.5 cm thick.

This type of toasted bread has, since it is toasted, a lower external surface that is much more concave than the upper surface (the one on which the seasonings are sprinkled) and is very crispy on the outside and flaky on the inside. These characteristics make it particularly well suited to the kit according to the present invention, because the rough surface is particularly capable of absorbing the oil, while the smooth lower surface is concave and capable of containing the oil absorbed. Therefore, the result is a particularly practical product for the preparation of bread and oil, because the oil does not easily spread outside the toasted bread. In addition, this type of toasted bread is already lightly salted and therefore oil alone is sufficient to make it seasoned and give it a particularly pleasant taste.

However, the kit according to the invention may also include a container with a small amount of table salt between 0.5-1.5g and therefore, for example, a single-use sachet containing 1 g of table salt.

The kit according to the invention may also contain a paper napkin and also possibly a paper table mat, a small plate or a small tray made of food-grade plastic or cardboard. The small plate or tray can have various shapes, such as a square, but can also be rectangular, round or oval. The size of the small plate or tray will be suited to containing one or more pieces of the above-mentioned bakery product. In a particularly preferred embodiment of the invention, the kit according to the invention includes a square plasticised cardboard tray the sides of which have dimensions ranging between 10 and 12 cm. The package that contains all of the components of the kit according to the invention is preferably a bag made of plastic or an aluminium plastic composite material that is easy to open. However, it could also be a cardboard box which, having a certain rigidity, could help to prevent the pieces of the bakery product from crumbling. In the preferred variant with the small plate or tray made of plastic or cardboard, the latter give the entire package the necessary rigidity to keep the bakery products intact during the operations of packaging, transport and handling during opening.

The practical use of the kit according to the invention is self-evident: the package is opened and, with the contents of the kit, the user performs the improvised preparation of the snack for spreading the seasonings on the flat surface, that is slightly concave, of the pieces of the bakery product.

The present invention will be better understood in the light of the following exemplificative embodiment.

### EXAMPLE:

A plastic bag of size 15 cm x 15 cm, heat-sealed at two opposite ends, contains a PET bottle containing 15 ml, containing exactly 15 ml of olive oil, two "Granetti"-type pieces of toasted bread, of approximate dimensions 9x4x2 cm, arranged on a square cardboard tray for food with 11 cm sides and with the edge slightly raised, packaged in a transparent plastic sachet for food and in a paper napkin.

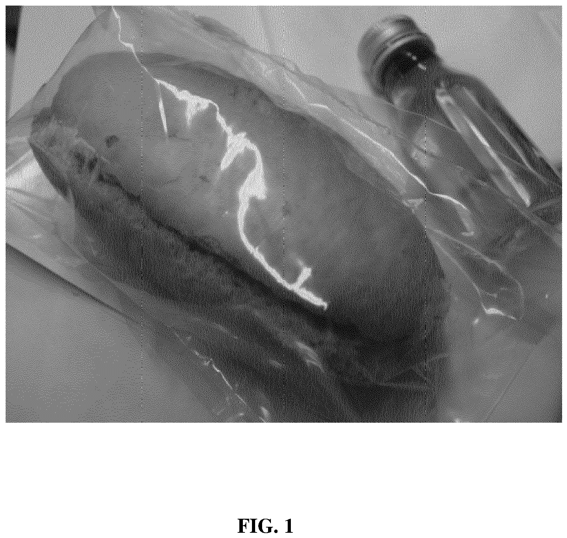

## Claims

1. A kit for preparing a snack based on bread and oil or bread and tomato, said kit comprising:
(a) a container containing an amount of seasoning selected from a vegetable oil and a tomato sauce; said container being a rigid and reclosable container or a single portion bag;
(b) one or more pieces of a bakery product wherein each piece of bakery product is a toasted half-rolls which therefore have a half-ovoid shape, with an upper surface which is essentially flat but slightly concave and wrinkled, and which is 7-11 cm long, 3-6 cm wide, and 1.5-3 cm thick ,said upper surface suitable for being spread with the aforesaid seasoning;
wherein said components (a) and (b) are contained in an easy-to-open package.

2. A kit according to claim 1, wherein said seasoning is olive oil.

3. A kit according to claim 2, wherein said container is a can or a bottle with reclosable screw cap.

4. A kit according to claim 1, wherein said seasoning is a tomato puree seasoned with oil.

5. A kit according to any one of the claims 1-4, wherein a container containing 0.5-1.5 g of table salt is further included.

6. A kit according to any one of the claims 1-5, wherein a paper napkin and/or a paper table mat, a small plate or a small tray made of food-grade plastic or cardboard are further included.

## Patentansprüche

1. Set zur Herstellung einer Zwischenmahlzeit, basierend auf Brot und Öl oder Brot und Tomate, wobei das Set aufweist:
(a) einen Behälter, der eine Menge Würzmittel enthält, ausgewählt aus einem Pflanzenöl und einer Tomatensoße; wobei der Behälter ein fester und wiederverschließbarer Behälter oder eine Einzel-Portionspackung ist;
(b) ein oder mehrere Stücke einer Backware, wobei jedes Stück der Backware eine geröstete Brötchenhälfte ist, die daher eine halbeiförmige Form aufweist, mit einer im Wesentlichen flachen, aber leicht konkaven und faltigen Oberseite, und 7 bis 11 cm lang, 3 bis 6 cm breit und 1,5 bis 3 cm stark ist, wobei die Oberseite geeignet ist, um mit dem oben genannten Würzmittel bestrichen zu werden; und
wobei die Komponenten (a) und (b) in einer leicht zu öffnenden Verpackung aufbewahrt werden.

2. Set gemäß Anspruch 1, wobei das Würzmittel Olivenöl ist.

3. Set gemäß Anspruch 2, wobei der Behälter eine Dose oder eine Flasche mit wiederverschließbarem Schraubdeckel ist.

4. Set gemäß Anspruch 1, wobei das Würzmittel Tomatenpüree ist, das mit Öl gewürzt ist.

5. Set gemäß einem der Ansprüche 1 bis 4, wobei zudem ein Behälter mit 0,5 - 1,5 g Tafelsalz umfasst ist.

6. Set gemäß einem der Ansprüche 1 bis 5, wobei zudem eine Papierserviette und / oder eine Tischauflage aus Papier, ein kleiner Teller oder ein kleines Servierbrett aus lebensmittelechtem Kunststoff oder Karton umfasst sind.

## Revendications

1. Kit de préparation d'une collation à base de pain et d'huile ou de pain et de tomate, ledit kit comprenant :
(a) un récipient contenant une certaine quantité d'un assaisonnement choisi entre une huile végétale et une sauce tomate ; ledit récipient étant un récipient rigide et refermable ou un sachet à portion unique ;
(b) un ou plusieurs morceaux d'un produit de boulangerie, chaque morceau de produit de boulangerie étant un petit pain grillé qui présente donc une forme semi-ovoïde, avec une surface supérieure qui est essentiellement plane mais légèrement concave et plissée et qui mesure de 7 à 11 cm de longueur, de 3 à 6 cm de largeur et de 1,5 à 3 cm d'épaisseur, ladite surface supérieure pouvant être recouverte de l'assaisonnement précité ;
dans lequel lesdits éléments (a) et (b) sont contenus dans un emballage facile à ouvrir.

2. Kit selon la revendication 1, dans lequel ledit assaisonnement est de l'huile d'olive.

3. Kit selon la revendication 2, dans lequel ledit récipient est une boîte ou une bouteille à capuchon vissé refermable.

4. Kit selon la revendication 1, dans lequel ledit assaisonnement est une purée de tomate assaisonnée d'huile.

5. Kit selon l'une quelconque des revendications 1 à 4, dans lequel un récipient contenant de 0,5 à 1,5 g de sel de table est également inclus.

6. Kit selon l'une quelconque des revendications 1 à 5, dans lequel une serviette en papier et/ou un set de table en papier, une petite assiette ou un petit plateau en matière plastique ou en carton alimentaire sont également inclus.
